# EUROPÄISCHE PATENTANMELDUNG

(11) **EP 1 509 018 A1**
(43) Veröffentlichungstag der Anmeldung: **23.02.2005**
(21) Anmeldenummer: 03018586.2
(22) Anmeldetag: 18.08.2003
(51) Int. Cl.: H04L 29/06, H04L 12/64, H04M 7/00

(54) **Verfahren, Software-Produkt und Vorrichtungen zur Signalisierung der Modifikation von Bearerverbindungen mittels SIP Protokoll**

(71) Anmelder: SIEMENS AKTIENGESELLSCHAFT, 80333 München (DE)
(72) Erfinder: Baumann, Thomas, 83607 Holzkirchen (DE)

(57) **Zusammenfassung**

Ein SIP Protokoll, z.B. SIP, SIP_T, wird um zumindest ein Protokollelement, z.B. action, zur Anzeige der Ursache(n) einer Bearer Modifkation erweitert. Als Folge kann eine deduktive Regenerierung der Ursache(n) anhand der übermittelten Bearer Modifikation entfallen.

## Beschreibung

In der Vergangenheit haben sich zwei wesentliche Typen von Kommunikationsnetzen zur Übermittlung von Informationen herausgebildet: Paketorientierte (Daten-) Netze und leitungsorientierte (Sprach-) Netze. Im Zuge der Konvergenz dieser beiden Netztypen haben sich konvergente (Sprach-Daten-) Netze herausgebildet. Durch Zusammenschluss dieser unterschiedlichen Netztypen entstehen hybride Netze, in denen der Gegenstand der vorliegenden Erfindung mit besonders schönen Vorteilen zum Einsatz kommt.

Leitungsorientierte Netze - auch Sprachnetze oder Telephonnetze genannt - sind auf die Übermittlung von in der Fachwelt auch als Gespräch, Call oder Session bezeichneten kontinuierlich strömenden (Sprach-) Informationen ausgelegt. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu akustisch wahrnehmbaren Störungen (z.B. Knacksen, Verzerrung, Echo, Stille). In der Fachwelt wird die Übermittlung von Sprache verallgemeinert auch als Echtzeit-(Übermittlungs-)Dienst bzw. als 'Realtime-Service' bezeichnet.

Paketorientierte Netze - auch Datennetze genannt - sind auf die Übermittlung von in der Fachwelt auch als 'Datenpaketströme' oder 'Flow' bezeichneten Paketströmen ausgelegt. Hierbei muss üblicherweise keine hohe Dienstgüte garantiert werden. Ohne garantierte Dienstgüte erfolgt die Übermittlung der Datenpaketströme z.B. mit zeitlich schwankenden Verzögerungen, da die einzelnen Datenpakete der Datenpaketströme üblicherweise in der Reihenfolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet.

Die Pakete unterscheiden sich üblicherweise je nach Art des paketorientierten Netzes. Sie können beispielsweise als Internet, X.25 oder Frame Relay Pakete, aber auch als ATM Zellen ausgebildet sein. Sie werden zuweilen auch als Nachrichten bezeichnet, v.a. dann, wenn eine Nachricht in einem Paket übermittelt wird.

Ein bekanntes Datennetz ist das Internet. Dieses wird wegen des dort zum Einsatz kommenden Internet Protokolls IP zuweilen auch IP Netz genannt, wobei dieser Begriff grundsätzlich weit zu verstehen ist und alle Netze umfasst, in denen das IP Protokoll eingesetzt wird. Das Internet ist als offenes (Weitverkehrs-) Datennetz mit offenen Schnittstellen zur Verbindung von (zumeist lokalen und regionalen) Datennetzen unterschiedlicher Hersteller konzipiert. Es stellt eine vom Hersteller unabhängige Transportplattform zur Verfügung.

Verbindungen sind Kommunikationsbeziehungen zwischen zumindest zwei Teilnehmern zum Zweck einer - zumeist gegenseitigen, d.h. bi-direktionalen - Informationsübermittlung. Der die Verbindung initiierende Teilnehmer wird üblicherweise als 'A-Teilnehmer' bezeichnet. Ein durch eine Verbindung mit einem A-Teilnehmer in Verbindung gesetzter Teilnehmer heißt 'B-Teilnehmer'. In einem verbindungslosen Netz repräsentieren Verbindungen zumindest die auf logisch abstrakter Ebene eindeutige Beziehung zwischen A- und B-Teilnehmer, d.h. entsprechend dieser Sichtweise stellen z.B. die verbindungslosen Flows im Internet logisch abstrahierte Verbindungen dar (z.B. A-Teilnehmer = Browser und B-Teilnehmer = Web Server). In einem verbindungsorientierten Netz repräsentieren Verbindungen zudem auf physikalischer Ebene eindeutige Wege durch das Netz, entlang denen die Informationen übermittelt werden.

Im Zuge der Konvergenz von Sprach- und Datennetzen werden Sprachübermittlungsdienste und zunehmend auch breitbandigere Dienste wie z.B. Übermittlung von Bewegtbildinformationen ebenfalls in paketorientierten Netzen realisiert, d.h. die Übermittlung der bisher üblicherweise leitungsorientiert übermittelten Echtzeitdienste erfolgt in einem konvergenten Netz - auch Sprach-Daten-Netz genannt - paketorientiert, d.h. in Paketströmen. Diese werden auch Echtzeitpaketströme genannt. Die Übermittlung von Sprachinformationen über ein paketorientiertes IP Netz wird dabei auch mit 'VoIP' (Voice over IP) gekennzeichnet.

In den internationalen Standardisierungsgremien IETF (Internet Engineering Task Force) und ITU (International Telecommunications Union) mehrere verteilte Architekturen für Sprach-Daten-Netze beschrieben. Allen ist gemeinsam, dass die Call Control Ebene und die Resource Control Ebene funktional deutlich voneinander getrennt sind und meist sogar auf unterschiedlichen Hardware Plattformen realisiert werden.

Die Call Control Ebene umfasst dabei zumindest einen (optionalen) Call Controller, dem u.a. folgende Funktionen zugeordnet sind:
- Address Translation: Umsetzung von E.164 Telephonnummern und anderen Alias Adressen (z.B. Rechnernamen) auf Transportadressen (z.B. Internetadressen).
- Admission Control (optional): Grundsätzliche Zulässigkeitsprüfung, ob und in welchem Umfang (z.B. VoIP fähige) Einrichtungen das Kommunikationsnetz nutzen dürfen.
- Bandwidth Control (optional): Verwaltung von Übermittlungskapazitäten.
- Zone Management: Registrierung von (z.B. VoIP fähigen) Einrichtungen und Bereitstellung obiger Funktionen für alle beim Call Controller registrierten Einrichtungen.

Optional können einem Call Controller zudem folgende Funktionen fallweise zugeordnet werden:
- Call Control Signaling: Alle Signalisierungsnachrichten werden von zumindest einem Call Controller vermittelt, d.h. alle Einrichtungen schicken und erhalten Signalisierungsnachrichten nur über den Call Controller. Ein direkter Austausch von Signalisierungsnachrichten zwischen den Einrichtungen ist untersagt.
- Call Authorization: Zulässigkeitsprüfung für eingehende und ausgehende Calls.
- Bandwidth Management: Steuerung der zulässigen Anzahl von Einrichtungen, die gleichzeitig das Kommunikationsnetz nutzen dürfen.
- Call Management: Verwaltung einer Liste bestehender Gespräche, um z.B. ein Besetzzeichen erzeugen zu können, falls dies von der Einrichtung selbst nicht erzeugt werden kann.
- Alias Address Modification: Rückgabe einer modifizierten Alias Adresse, bspw. mit einer H.225.0 Nachricht ACF (Admission Confirmation). Diese Adresse muss der Endpunkt bei Verbindungsaufbau verwenden.
- Dialed Digit Translation: Übersetzung der gewählten Ziffern in eine E.164 Telephonnummer oder eine Nummer aus einem privaten Nummerierungsschema.

Beispiele für Call Controller stellen der von der ITU in der H.323 Standard Familie vorgeschlagene 'Gatekeeper' oder der von der IETF vorgeschlagene 'SIP Proxy' dar. Wird ein größeres Kommunikationsnetz in mehrere Domänen - auch 'Zonen' genannt - gegliedert, kann in jeder Domäne ein separater Call Controller vorgesehen werden. Eine Domäne kann auch ohne einen Call Controller betrieben werden. Sind mehrere Call Controller in einer Domäne vorgesehen, soll nur ein einziger von diesen aktiviert sein. Ein Call Controller ist aus logischer Sicht getrennt von den Einrichtungen zu sehen. Physikalisch muss er jedoch nicht in einer separaten Call Controller Einrichtung realisiert sein, sondern kann auch in jedem Endpunkt einer Verbindung (beispielsweise ausgebildet als H.323 oder SIP Endpunkt, Endgerät, Media Gateway, Multipoint Control Unit) oder auch einer primär zur programmgesteuerten Datenverarbeitung ausgebildeten Einrichtung (beispielsweise: Rechner, PC, Server) vorgesehen werden. Auch eine physikalisch verteilte Realisierung ist möglich.

Ein alternatives Beispiel ist ein Media Gateway Controller, dem üblicherweise die optionalen Funktionen Call Control Signaling and Call Management zugeordnet werden. Weiterhin ist die Zuordnung einer Funktion Signaling Conversion zur Umsetzung unterschiedlicher (Signalisierung-) Protokolle denkbar, was z.B. an der Grenze von zwei unterschiedlichen Netzen, die zu einem hybriden Netz zusammengeschlossen sind, erforderlich sein kann.

Die Resource Control Ebene umfasst zumindest einen Resource Controller, dem u.a. folgende Funktionen zugeordnet sind:
- Capacity Control: Steuerung des dem Kommunikationsnetz durch Paketströme zugeführten Verkehrsvolumens, z.B. durch Kontrolle der Übermittlungskapazität einzelner Paketströme.
- Policy Activation (optional): ggf. für einen priorisierten Paketstrom Resourcen im Kommunikationsnetz für dessen Übermittlung reservieren.
- Priority Management (optional): Prioritätskennzeichen in den Paketen entsprechend der Priorität ihrer Paketströme setzen, kontrollieren und gegebenenfalls korrigieren, falls die Pakete bereits mit Prioritäten gekennzeichnet sind.

Der Resource Controller wird auch als 'Policy Decision Point (PDP)' bezeichnet. Er ist beispielsweise innerhalb von sog.

Edge Routern - auch Edge Device, Zugangsknoten oder bei Zuordnung zu einem Internet Service Provider (ISP) auch Provider Edge Router (PER) genannt - realisiert. Diese Edge Router können auch als Media Gateway zu anderen Netzen ausgebildet sein, mit denen die Sprach-Daten-Netze verbunden werden. Diese Media Gateway sind dann sowohl mit einem Sprach-Daten-Netz als mit den anderen Netzen verbunden und dienen intern der Umsetzung zwischen den unterschiedlichen (Übermittlungs-) Protokollen der verschiedenen Netze. Der Resource Controller kann auch nur als Proxy ausgebildet sein und Resource Controller relevante Informationen an eine separate Einrichtung weiterleiten, auf der die relevanten Informationen entsprechend einer Funktion des Resource Controllers bearbeitet werden.

Zur Koordination der beiden Ebenen wird üblicherweise eine Mehrzahl von Nachrichten versendet, die lediglich zur Abstimmung der beteiligten Komponenten untereinander, jedoch nicht zur Übermittlung der "eigentlichen" Informationen zwischen den Endgeräten dienen. Diese mit den Nachrichten übermittelten Informationen werden üblicherweise als Signalisierungsinformationen, Signalisierungsdaten bzw. schlicht als Signalisierung bezeichnet. Der Begriff ist dabei weit zu verstehen. So sind z.B. neben den Signalisierungsnachrichten auch die Nachrichten gemäß dem RAS Protokoll, die Nachrichten gemäß dem ITU-Standard H.245 zur Steuerung von Nutzkanälen bestehender Gespräche sowie alle weiteren ähnlich ausgebildeten Nachrichten umfasst. Das Signalisierungsprotokoll für den Verbindungsaufbau (Call Setup) und -abbau (Call Release) nach der ITU ist z.B. im Standard H.225.0 beschrieben, das nach der IETF im RFC2543 ("SIP: Session Initiation Protocol") bzw. dessen Überarbeitungen RFC2543bis0x oder RFC3261. Die "eigentlichen Informationen" werden zur Unterscheidung von der Signalisierung auch Nutzinformationen, Payload, Medieninformationen, Mediendaten oder schlicht Medien genannt. Kommunikationsbeziehungen, die zur Übermittlung der Signalisierung dienen, werden im weiteren auch als Signalisierungsverbindungen bezeichnet. Die zur Übermittlung der Nutzinformationen eingesetzten Kommunikationsbeziehungen werden z.B. Sprechverbindung, Nutzkanalverbindung oder - vereinfacht - Nutzkanal, Bearerchannel oder schlicht Bearer genannt. In diesem Zusammenhang versteht man unter out-of-band bzw. outband die Übermittlung von Informationen auf einem anderen Weg / Medium als den im Kommunikationsnetz zur Übermittlung von Signalisierungs- und Nutzinformationen vorgesehenen. Insbesondere ist hiervon eine lokale Konfiguration von Einrichtungen vor Ort umfasst, die z.B. mit einer lokalen Steuereinrichtung vorgenommen wird. Demgegenüber werden bei in-band Informationen auf dem gleichen Weg / Medium, ggf. logisch getrennt von den betrachteten Signalisierungs- und Nutzinformationen, übermittelt.

Das prinzipielle Zusammenwirken der beiden Ebenen sei am Beispiel eines Call Setup zwischen zwei als Teilnehmerendgeräte ausgebildeten VoIP Einrichtungen erläutert. Dabei wird zunächst von einem homogenen Sprach-Daten-Netz ausgegangen.

Innerhalb oder teilweise auch zeitlich vor dem eigentlichen Call Setup laufen bei Einwahl eines Endgeräts in das IP-Netz (z.B. über einen Internet Service Provider) die Schritte Authentisierung, Autorisierung und (Start des) Accounting ab. Diese sogenannte 'AAA' Funktionalität wird üblicherweise durch den Zugriff auf eine Subscriber-Datenbank, in der alle Nutzer mit ihren Kennungen, Passwörtern, Rechten, etc. gespeichert sind, realisiert. Dieser Zugriff ist langsam und vergleichsweise komplex. In den heutigen "Best Effort" IP Netzen findet dieser AAA Vorgang normalerweise einmal während des Einwählens des Nutzers statt. Eine weitere Authentisierung erfolgt bei Einsatz eines Call Controllers, wenn sich das Endgerät beim Call Controller des Internet Service Providers registriert. Nach dem ITU-Standard H.323 wird diese Authentisierung bzw. Registrierung eines Endgeräts beim zugeordneten Gatekeeper gemäß dem RAS (Registration, Admission, Status) Protokoll durchgeführt, das im ITU-Standard H.225.0 beschrieben ist.

Der eigentliche Call Setup beginnt üblicherweise damit, dass in einem ersten Schritt die Endgeräte der Teilnehmer ihre Fähigkeiten (z.B. Liste der unterstützten CODEC) austauschen, um die benötigten Ressourcen (z.B. Bandbreite) und die geforderte QoS (z.B. Delay, Jitter) zu bestimmen. Die Endgeräte sind bei Sprachtelephonie z.B. als IP Telephone oder VoIP Client Software ausgebildet, bei Online-Video könnte eines der Endgeräte ein Content- bzw. Application-Server sein, z.B. im Netz des Internet Service Providers (ISP).

Der Austausch der Signalisierungsnachrichten erfolgt entweder direkt zwischen den Endgeräten oder unter Vermittlung eines Call Controllers. Hierbei ist bei jedem Call für jedes Endgerät und für jede Übertragungsrichtung individuell festgelegt, welche Variante zum Einsatz kommt. Die erste Variante wird in der H.323 Terminologie auch als 'Direct Endpoint Call Signaling' und die zweite als 'Gatekeeper Routed Call Signaling' bezeichnet. Bei Direct Endpoint Call Signaling können an einen Call Controller ggf. Kopien ausgewählter Signalisierungsnachrichten übermittelt werden, so dass ein Call Controller auch bei dieser Variante häufig Kenntnis von den zwischen den Endgeräten abgestimmten Ressourcen- und QoS-Anforderungen hat. Diese Anforderungen werden jedoch von ihm selbst nicht aktiv beeinflusst oder verifiziert.

Alternativ kann auch das SIP Protokoll zum Einsatz kommen, und zwar sowohl für IP Geräte als auch zwischen Media Gateway Controllern. Im zweiten Fall wird das SIP Protokoll mit SIP_T (SIP for Telephones) bezeichnet, das im Standard RFC3372 beschrieben ist. Wenn ein Call mit Hilfe des SIP Protokolls aufgebaut wird, so wird zwischen den beiden Seiten der Verbindung üblicherweise eine Beschreibung des Bearers ausgetauscht. Dazu wird das Session Description Protocol (SDP) nach dem Standard RFC2327 eingesetzt. Dieser Einsatz ist u.a. im Standard RFC3264: "An Offer/Answer Model with the Session Description Protocol (SDP)" beschrieben. Wichtig sind dabei vor allem folgende Bearer Daten:
- IP Adresse der Bearer Connection
- RTP/UDP Port der Bearer Connection (je nachdem, ob eine Sprach- oder Datenübertragung vorliegt)
- Codec(s), die für die Sprach bzw. Datenübertragung benützt werden (können)
- Streammode der Bearer Connection

In einem zweiten, optionalen Schritt kann die derart abgestimmte Ressourcen- und QoS-Anforderung direkt von den Endgeräten der Teilnehmer an ihren zugeordneten Resource Controller übermittelt werden. Nach Prüfung der Ressourcen- und QoS-Anforderung wird von dem Resource Controller eine Bestätigung (oder Ablehnung) an das Endgerät zurückgeschickt.

In einem dritten, ebenfalls optionalen Schritt wird im Edge Router und gegebenenfalls weiteren Routern im Netz eine Policy aktiviert, mit der diese Router prüfen und gewährleisten, dass der vom Endgerät verursachte Verkehr innerhalb der Grenzen liegt, die in der Anforderung spezifiziert wurden. Ein Beispiel für einen derartigen Reservierungsmechanismus ist RSVP (resource ReSerVation Protocol).

Zusammenfassend kann der Function Split zwischen den beiden Ebenen so beschrieben werden, dass der Resource Control Ebene lediglich die Funktionen zugeordnet sind, die zur Übermittlung von Nutzinformationen erforderlich sind, während von der Call Control Ebene die Intelligenz zur Steuerung der Resource Control Ebene umfasst ist. Mit anderen Worten: Die Einrichtungen der Resource Control Ebene besitzen möglichst keine Netzsteuerungsintelligenz und können in der Folge wirtschaftlich besonders vorteilhaft auf separaten Hardware Plattformen realisiert werden. Dies ist wegen der im Vergleich zu Call Control Ebene höheren Installationszahlen in dieser Ebene ein besonders schöner Vorteil.

Sowohl in konvergenten Sprach-Daten-Netzen als auch in hybriden Netzen, die z.B. durch einen Zusammenschluss eines konvergenten Sprach-Daten-Netzes mit einem konventionellen leitungsorientierten Sprachnetz gebildet werden, entstehen bei der Übermittlung von Informationen - insbesondere der in Echtzeitpaketströmen - neue technische Problemstellungen aufgrund der neuen bzw. unterschiedlichen Technologien, die in den jeweiligen Netztypen zum Einsatz kommen.

Es ist Aufgabe der Erfindung, zumindest eines dieser Probleme zu erkennen und durch Angabe von zumindest einer Lösung den Stand der Technik zu bereichern.

Die Erfindung stellt sich die Frage, ob nach dem Aufbau eines Calls über das SIP Protokoll weiterhin alle Features genutzt werden können, die derzeit aus der Telefonie bekannt sind. Bei vielen dieser Features sind dabei Modifikationen des IP Bearers notwendig, z.B.:
- Umschaltung der Sprachverbindung auf Datenübertragung für Fax- und Modem-Anwendungen
- Bearer Redirection (z.B. für die Umleitung der Verbindung auf ein Announcement)
- Neuaushandlung des Sprach-/Datencodecs während des Calls (Mid Call Codec Negotiation)
- Call Hold und Call Retrieve

Alle oben genannten Features haben einen neuen Austausch der Bearer Beschreibung in Form einer SDP Session zur Folge, die in einer SIP/SIP_T:Re-INVITE Meldung bzw. der zugehörigen SIP/SIP_T Response transportiert wird. Dabei wird die Ursache für die Bearer Modifikation weder im SIP Protokoll noch in der SDP Session explizit übertragen, sondern muss auf der empfangenden Seite aus den SDP Daten, mit denen lediglich die Bearer Modifikation angezeigt wird, regeneriert werden. Diese Regenerierung ist aber nicht immer eindeutig möglich. Beispielsweise kann es in folgenden Fällen Probleme geben:
- Wird der Codec einer Sprachverbindung geändert, kann dies ein Codec Switchover für Fax/Modem, ein Switchover auf einen neuen Sprachcodec, oder aber auch eine Neuaushandlung des Sprachcodecs während des Calls (Mid Call Codec Negotiation) sein.
- Werden mehrere Features kombiniert, ist es zuweilen nicht mehr möglich, anhand der neu empfangenen SDP Session zu ermitteln, welche Features kombiniert wurden. Eine SDP Session für Bearer Redirect sieht beispielsweise genauso aus wie eine SDP Session, die für gleichzeitiges Call Retrieve und Bearer Redirect geschickt wird.

Ohne eindeutige Regenerierung der Ursache kann auf der empfangenden Seite jedoch keine aussagekräftige Mitteilung getroffen werden (z.B. am Display eines Telephons oder auf der Bedienoberfläche eines Software Telephon Clients), welches Feature gerade von der sendenden Seite aktiviert worden ist.

Eine Lösung für diese der Erfindung zugrunde liegende Problemsituation ist in den Patentansprüchen angegeben.

Mit dieser Lösung sind eine Vielzahl von Vorteilen verbunden:
- Durch Übermittlung der Ursache der Bearer Modifikation wird eine uneingeschränkte Nutzung verschiedenster Telephonie Leistungsmerkmale ermöglicht.
- Das bisherige, zum Teil sehr aufwändige, deduktive Ermitteln der Ursache der Bearer Modifikation anhand der übermittelten Bearer Modifikation entfällt.
- Durch die (eindeutige) Angabe der Ursache(n) der Bearer Modifikation können die von der sendenden Seite aktivierten Features auch dann bestimmt und angezeigt werden, wenn diese nicht deduktiv aus der Bearer Modifikation regenerierbar sind.

Weitere vorteilhafte Ausgestaltungen der Erfindung ergeben sich aus den unter- oder nebengeordneten Ansprüchen.

Das Interworking zwischen den Protokollen SIP / SIP_T und den Protokollen BICC CS2 / ISUP+ (siehe ITU-T Recommendation Q.1902.x, Bearer Independent Call Control Protocol CS2) wird grundlegend vereinfacht, wenn das Protokollelement als action Parameter mit folgenden Werten ausgebildet ist: connect-backward, connect-forward, connect-forward-no-notification, connect-forward-plus-notification, connect-forward-no notification-plus-selected codec, connect forward-plus-notification-plus-selected codec, connected, switched, selected-codec, modify-codec, successful-codec-modification, codec-modification-failure, mid-call-codec-negotiation, modify-to-selected-codec-information, mid-call-codecnegotiation-failure, redirect-backwards-request, redirect-forwards-request, redirect-bearer-release-request, redirect-bearer-release-proceed, redirect-bearer-release-complete, redirect-cut-through-request, redirect-bearer-connectedindication, redirect-failure, remote-hold, remote-hold-ack, remote-retrieval, remote-retrieval-ack, weil der action Parameter so problemlos in die BICC CS2 / ISUP+ Informationselemente "Action Indicator" und "Bearer Redirection Indicators" umgesetzt werden kann.

Die Erfindung wird im folgenden anhand von weiteren Ausführungsbeispielen, die auch in den Figuren dargestellt sind, erläutert. Dabei zeigt:
- Figur 1: eine Anordnung zur Durchführung des erfindungsgemäßen Verfahrens mit einem hybriden Kommunikationsnetz, bestehend aus einem paketorientierten, integrierten Sprach-Daten-Netz und einem leitungsorientierten Sprachnetz, die durch zwischengeschaltete Media Gateways und Media Gateway Controller verbunden sind, sowie zwei Endpunkten einer Informationsübermittlung
- Figur 2: ein Ablaufdiagramm, in dem eine Ausführung der Erfindung exemplarisch aufgezeigt ist

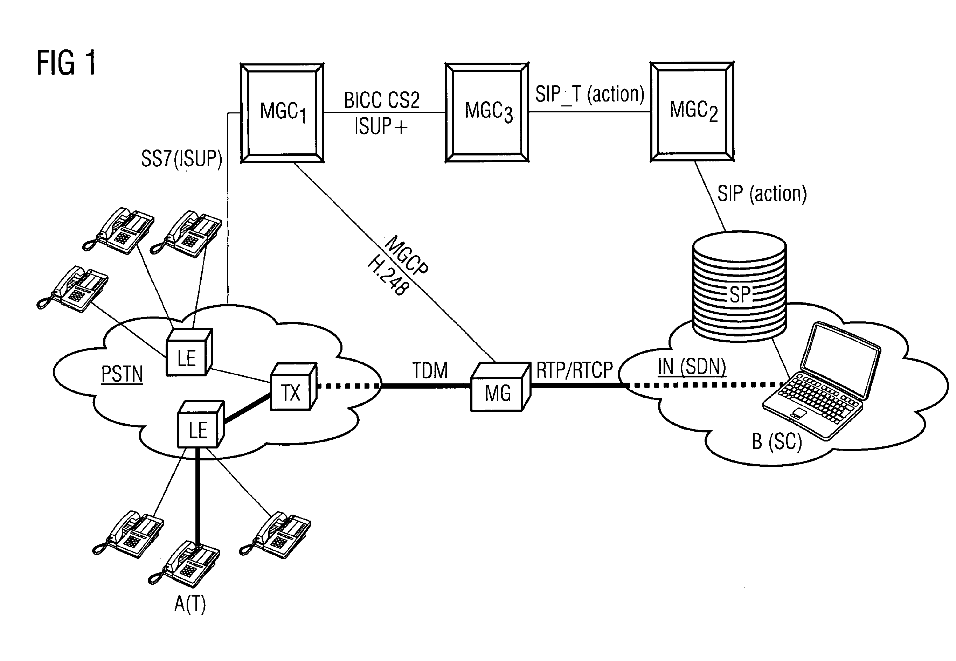

In Figur 1 ist eine beispielhafte Anordnung zur Durchführung des erfindungsgemäßen Verfahrens dargestellt. Sie umfasst ein leitungsorientiertes Netz PSTN und ein Kommunikationsnetz IN, das vorzugsweise als integriertes Sprach-Daten-Netz SDN ausgebildet ist. Die beiden Netze PSTN, IN sind zu einem hybriden Netz zusammengeschlossen. Das Netz IN ist vorzugsweise als ein IP Netz (z.B. das Internet) ausgebildet und umfasst als Call Controller einen SIP Proxy SP.

Der Zusammenschluss des leitungsorientierten Bearers TDM mit dem paketorientierten Bearer RTP/RTCP wird durch ein zwischengeschaltetes Media Gateways MG zur Konvertierung zwischen unterschiedlichen, netzspezifischen Nutzkanaltechnologien RTP/RTCP (Real Time [Control] Protocol) und TDM (Time Devision Multiplex), der Zusammenschluss der Signalisierung SS7 des Netzes PSTN mit der Signalisierung SIP des Netzes IN durch zwischengeschaltete Media Gateway Controller MGC₁₋₃ zur Konvertierung zwischen unterschiedlichen netzspezifischen Signalisierungsprotokollen SIP (Session Initiation Protocol) bewirkt. Dabei kommt zwischen den Controllern MGC₁ und MGC₃ ein Protokoll BICC CS2 / ISUP+ und zwischen den Controllern MGC₃ und MGC₂ ein Protokoll SIP_T (SIP for Telephones) zum Einsatz.

Das Gateway MG wird von dem ihm zugeordneten Controller MGC₁ durch ein - vorzugsweise international genormtes - Protokoll, z.B. MGCP (Media Gateway Control Protocol) oder H.248 gesteuert. Es ist üblicherweise als separate Einheit realisiert, die auf einer anderen physikalischen Einrichtung / Hardware Plattform zum Ablauf kommt als die Controller MGC.

An das Netz PSTN_{A} ist ein Teilnehmer A mit Hilfe eines herkömmlichen Telephons T, an das Netz IN ein Teilnehmer B mit der eines SIP fähigen Telephons - z.B. eines in Software realisierten SIP Clients SC - angeschlossen, zwischen denen als Bearer eine end-to-end Nutzverbindung TDM, RTP/RTCP eingerichtet ist.

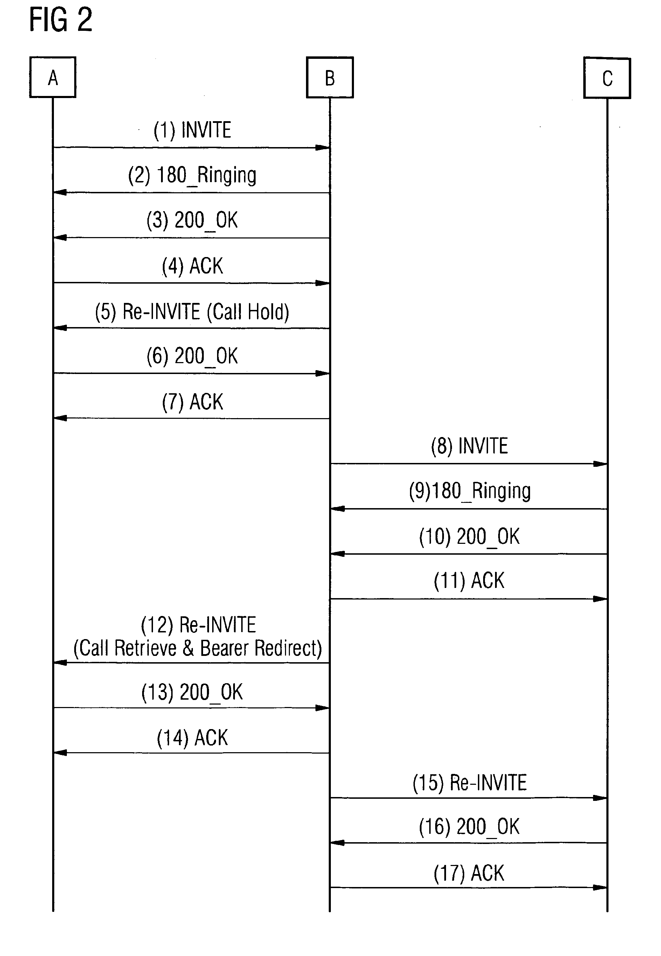

In Figur 2 ist die Abfolge von SIP Nachrichten (1)-(4) zum Aufbau eines Bearers zwischen zwei SIP Clients A, B und von Nachrichten (5)-(17) zur Modifikation des Bearers durch Weiterleitung des Call von dem SIP Client B zu einem SIP Client C dargestellt, in der die Nachrichten (5), (6), (12), (13), (15) und (16) gemäß einem erfindungsgemäßen SIP Protokoll ausgebildet sind.

Es sei betont, dass die derart aufgezeigten Ausführungen der Erfindung trotz ihre teilweise sehr detailgetreuen Darstellung von konkreten Netzszenarien lediglich beispielhafter Natur und nicht einschränkend zu verstehen sind. Dem Fachmann ist klar, dass die Erfindung bei allen denkbaren Netzkonfigurationen, insbesondere anderen Interworking Szenarien sowie weiteren paketorientierten Netzen zum Einsatz kommen kann wie z.B. Intranet, Extranet, einem lokalen Netz (Local Area Network - LAN) oder einem, z.B. als Virtuelles Privates Netz (VPN) ausgebildeten firmeninternen Netz (Corporate Network).

In dem Ausführungsbeispiel nach Figur 1 werden das SIP Protokoll sowie sein Derivat SIP_T in einem komplexen, hybriden Netzszenario eingesetzt, bei dem die Netzsignalisierung mehrfach zwischen den Protokollen SIP, SIP_T, BICC CS2 / ISUP+, SS7 (ISUP) umgesetzt wird. Dabei wird vom Controller MGC₃ eine Umsetzung zwischen dem Protokoll BICC CS2 / ISUP+ und dem erfindungsgemäß zumindest ein Protokollelement - insbesondere Parameter action - zur Anzeige der Ursache von Modifikationen des Bearers TDM, RTP/RTCP umfassenden SIP_T Protokoll bewirkt.

Dazu wird in ausgewählten SIP_T Nachrichten im Message Body neben ein ISUP MIME Content eine SDP Session übertragen (mixed content; siehe RFC2046 "Multipurpose Internet Mail Extensions (MIME) Part Two: Media Types", und RFC3204 "MIME media types for ISUP and QSIG Objects"), in deren SDP Body ein "Content-Disposition" Header Field gemäß RFC2183 eingebettet ist, das jeweils zumindest ein erfindungsgemäßes Protokollelement zur Übermittlung der Ursache(n) einer Bearer Modifikation umfasst. Der "disposition-type" dieses Header Field wird auf "session" gesetzt. Zudem wird als neues Protokollelement ein neuer "disposition-parameter" namens "action" zur Angabe der Ursache der Bearer Modifikation eingeführt und in das "Content-Disposition" Header Field eingebettet.

Zur Kombination mehrerer Ursachen/Features können mehrere "action" parameter in einem "Content-Disposition" Header Field übertragen werden. In Anlehnung an die ITU_T Standard Q.765.5 (Signalling System No. 7 - Application transport mechanism for Bearer Independent Call Control), welcher gemäß dem ITU-T Standard Q.1902.x BICC CS2 (bearer independent call control - capability set 2) z.B. zwischen Call Controllern MGC zum Einsatz kommt, umfasst der Wertebereich des "action" parameters folgende Werte: connect-backward, connect-forward, connect-forward-no-notification, connect-forward-plus-notification, connect-forward-no notification-plus-selected codec, connect forward-plus-notification-plus-selected codec, connected, switched, selected-codec, modify-codec, successful-codec-modification, codec-modification-failure, mid-call-codec-negotiation, modify-to-selected-codec-information, midcall-codec-negotiation-failure, redirect-backwards-request, redirect-forwards-request, redirect-bearer-release-request, redirect-bearer-release-proceed, redirect-bearer-release-complete, redirect-cut-through-request, redirect-bearerconnected-indication, redirect-failure, remote-hold, remote-hold-ack, remote-retrieval, remote-retrieval-ack.

Ein beispielhaftes erfindungsgemäßes "Content-Disposition" Header Field sieht sieht in diesem Beispiel wie folgt aus (das erfindungsgemäße Protokollelement ist durch Fettdruck hervorgehoben):

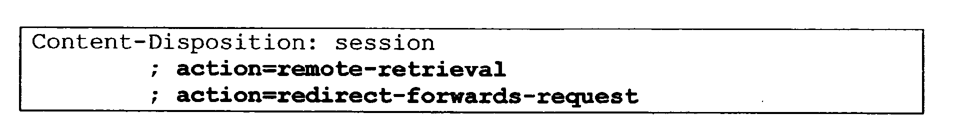

Wegen der Erfindung ergibt sich der schöne Vorteil, dass die BICC CS2 / ISUP+ Informationselemente "Action Indicator" und "Bearer Redirection Indicators" sehr einfach mit aussagekräftigen Werten befüllt werden können.

Als weiteres Ausführungsbeispiel der Erfindung wird ein Bearer Modifikation zwischen drei Teilnehmern A, B, C, die alle als SIP Clients SC ausgebildet sein, beschrieben. Der Ablauf dieses Szenarios ist in Figur 2 dargestellt. Zum vereinfachten Verständnis der Erfindung sind in Figur 2 nur SIP Clients SC dargestellt und SIP Proxy Server SP weggelassen.

Bei diesem Beispiel wird zunächst eine Verbindung/Call zwischen den SIP Clients A und B aufgebaut - Nachrichten (1)-(4). Anschließend legt der SIP Client B den Call auf Hold - Nachrichten (5)-(7) - und ruft dann den SIP Client C an - Nachrichten (8)-(11). Nach diesem Anruf schickt der SIP Client B eine "Re-INVITE" Nachricht (12) zum SIP Client A, mit der er gleichzeitig das Call Hold aufhebt (Call Retrieve) und den von dem SIP Client A ausgehenden Call Stream auf den SIP Client C (Bearer Redirect) umlenkt - Nachrichten (12)-(14). Schließlich schickt der SIP Client B eine "Re-INVITE" Nachricht (15) zum SIP Client C, mit der er den von dem SIP Client C ausgehenden Call Stream auf SIP Client A (Bearer Redirect) umgelenkt wird. Das Endergebnis ist ein Call Transfer vom SIP Client B zum SIP Client C. Der SIP Client A kann nun mit dem SIP Client C sprechen.

Nachfolgend werden die Nachrichten (1)-(17) dargestellt, wobei in diesen auf die Darstellung von "Via" Header Fields verzichtet wird, weil diese für den SDP Body Content der SIP Nachrichten transparent sind. Dabei wird eine SDP Session in einer SIP Message als MIME Message Body gemäß RFC2045 transportiert. Im Falle von SDP wird in diesem Beispiel der Content des SIP Message Body mit folgenden SIP Header Fields spezifiziert:
- "MIME-Version":
   fest auf "MIME-Version: 1.0" gesetzt (= RFC2045) - kann optional auch weggelassen werden.
- "Content-Length":
   spezifiziert die Länge des gesamten Message Body.
- "Content-Type":
   spezifiziert den Typ des Contents in Form eines Media Type und Media Subtype. Im Falle von SDP sieht der Content Type folgendermaßen aus:
      media type = "application"
      media subtype = "SDP"

Eine beispielhafte Nachricht SIP:Re-INVITE mit SDP sieht demnach wie folgt aus:

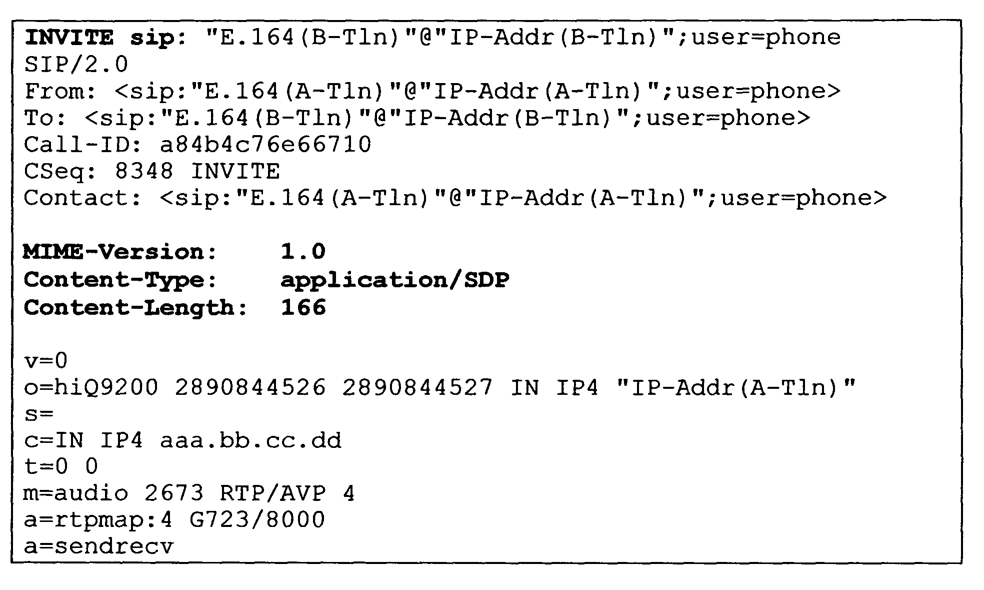

Zur Übertragung der Ursache einer Bearer Modifikation wird für SDP beispielsweise das "Content-Disposition" Header Field gemäß RFC2183 eingesetzt, dessen Syntax derjenigen des vorherigen Ausführungsbeispiels entsprechen kann.

Eine beispielhaftes "Content-Disposition" Header Field, das wegen einer Bearer Redirection gesendet wird, sieht demnach in obiger Nachricht SIP:Re-INVITE, eingebettet in ein SDP Protokoll, wie folgt aus (das erfindungsgemäße Protokollelement ist durch Fettdruck hervorgehoben):

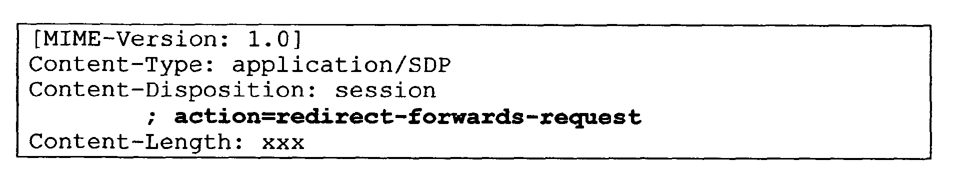

Für das Ausführungsbeispiel ergeben sich demnach folgende Nachrichten (1)-(17), wobei die erfindungsgemäßen Protokollelemente in den Nachrichten (5), (6), (12), (13), (15) und (16) entsprechend hervorgehoben sind:
**Nachricht (1): INVITE Client A -> Client B**
   INVITE sip:ClientB@gmx.com SIP/2.0
   From: sip:ClientA@munichnet.com;tag=1c24841
   To: sip:ClientB@gmx.com
   Call-ID: call-973574144@munichnet.com
   CSeq: 1 INVITE
   Contact: <sip:ClientA@pc43.munichnet.com>
   Content-Type: application/sdp
   Content-Length: 161
   v=0
   o=ClientA 2890844526 2890844526 IN IP4 pc43.munichnet.com s=
   c=IN IP4 192.0.2.101
   t=0 0
   m=audio 49172 RTP/AVP 8 4
   a=rtpmap:8 PCMA/8000
   a=rtpmap:4 G723/8000
**Nachricht (2): 180 Ringing Client B -> Client A**
   SIP/2.0 180 Ringing
   From: sip:ClientA@munichnet.com;tag=1c24841
   To: sip:ClientB@gmx.com;tag=0da40dd4-81553525
   Call-ID: call-973574144@munichnet.com
   CSeq: 1 INVITE
   Contact: <sip:ClientB@sv71.gmx.com>
   Content-Length: 0
**Nachricht (3): 200 OR Client B -> Client A**
   SIP/2.0 200 OK
   From: sip:ClientA@munichnet.com;tag=1c24841
   To: sip:ClientB@gmx.com;tag=0da40dd4-81553525
   Call-ID: call-973574144@munichnet.com
   CSeq: 1 INVITE
   Contact: <sip:ClientB@sv71.gmx.com>
   Content-Type: application/sdp
   Content-Length: 124
   v=0
   o=ClientB 4770 4770 IN IP4 sv71.gmx.com
   s=
   c=IN IP4 178.224.67.133
   t=0 0
   m=audio 3456 RTP/AVP 8
   a=rtpmap:8 PCMU/8000
**Nachricht (4): ACK Client A -> Client B**
   ACK sip:ClientB@sv71.gmx.com SIP/2.0
   From: sip:ClientA@munichnet.com;tag=1c24841
   To: sip:ClientB@gmx.com;tag=0da40dd4-81553525
   Call-ID: call-973574144@munichnet.com
   CSeq: 1 ACK
   Content-Length: 0
**Nachricht (5): Re-INVITE Client B -> Client A**
   INVITE sip:ClientA@pc43.munichnet.com SIP/2.0
   From: sip:ClientB@gmx.com;tag=0da40dd4-81553525
   To: sip:ClientA@munichnet.com;tag=1c24841
   Call-ID: call-973574144@munichnet.com
   CSeq: 2 INVITE
   Contact: <sip:ClientB@sv71.gmx.com>
   Content-Type: application/sdp
   **Content-Disposition: session;**
   **action=remote-hold**
   Content-Length: 128
   v=0
   o=ClientB 4770 4771 IN IP4 sv71.gmx.com
   s=
   c=IN IP4 0.0.0.0
   t=0 0
   a=sendonly
   m=audio 3456 RTP/AVP 8
   a=rtpmap:8 PCMU/8000
**Nachricht (6): 200 OK Client A -> Client B**
   SIP/2.0 200 OK
   From: sip:ClientB@gmx.com;tag=0da40dd4-81553525
   To: sip:ClientA@munichnet.com;tag=1c24841
   Call-ID: call-973574144@munichnet.com
   CSeq: 2 INVITE
   Contact: <sip:ClientA@pc43.munichnet.com>
   Content-Type: application/sdp
   **Content-Disposition: session;**
   **action=remote-hold-ack**
   Content-Length: 155
   v=0
   o=ClientA 2890844526 2890844527 IN IP4 pc43.munichnet.com s=
   c=IN IP4 0.0.0.0
   t=0 0
   a=recvonly
   m=audio 49172 RTP/AVP 8
   a=rtpmap:8 PCMA/8000
**Nachricht (7): ACK Client B -> Client A**
   ACK sip:ClientA@pc43.munichnet.com SIP/2.0
   From: sip:ClientB@gmx,com;tag=0da40dd4-81553525
   To: sip:ClientA@munichnet.com;tag=1c24841
   Call-ID: call-973574144@munichnet.com
   CSeq: 2 ACK
   Content-Length: 0
**Nachricht (8): INVITE Client B -> Client C**
   INVITE sip:ClientC@tomnet.de SIP/2.0
   From: sip:ClientB@gmx,com;tag=0da40dd4-81553526
   To: sip:ClientC@tomnet.de
   Call-ID: call-6789@gmx.com
   CSeq: 10 INVITE
   Contact: <sip:ClientB@sv71.gmx.com>
   Content-Type: application/sdp
   Content-Length: 122
   v=0
   o=ClientB 5612 5612 IN IP4 sv71.gmx.com
   s=
   c=IN IP4 178.224.67.133
   t=0 0
   m=audio 3460 RTP/AVP 8
   a=rtpmap:8 PCMU/8000
**Nachricht (9): 180 Ringing Client C -> Client B**
   SIP/2.0 180 Ringing
   From: sip:ClientB@gmx,com;tag=0da40dd4-81553526
   To: sip:ClientC@tomnet.de;tag=6545b243a
   Call-ID: call-6789@gmx.com
   CSeq: 10 INVITE
   Contact: <sip:ClientC@nb23.tomnet.de>
   Content-Length: 0
**Nachricht (10): 200 OK Client C -> Client B**
   SIP/2.0 200 OK
   From: sip:ClientB@gmx,com;tag=0da40dd4-81553526
   To: sip:Clientc@tomnet,de;tag=6545b243a
   Call-ID: call-6789@gmx.com
   CSeq: 10 INVITE
   Contact: <sip:ClientC@nb23.tomnet.de>
   Content-Type: application/sdp
   Content-Length: 127
   v=0
   o=ClientC 293845 293845 IN IP4 nb23.tomnet.de s=
   c=IN IP4 27.159.111.76
   t=0 0
   m=audio 8275 RTP/AVP 8
   a=rtpmap:8 PCMU/8000
**Nachricht (11): ACK Client B -> Client C**
   ACK sip:ClientC@tomnet.de SIP/2.0
   From: sip:ClientB@gmx.com;tag=0da40dd4-81553526
   To: sip:ClientC@tomnet.de;tag=6545b243a
   Call-ID: call-6789@gmx.com
   CSeq: 10 ACK
   Content-Length: 0
**Nachricht (12): Re-INVITE Client B -> Client A**
   INVITE sip:ClientA@pc43.munichnet.com SIP/2.0
   From: sip:ClientB@gmx.com;tag=0da40dd4-81553525
   To: sip:ClientA@munichnet.com;tag=1c24841
   Call-ID: call-973574144@munichnet.com
   CSeq: 3 INVITE
   Contact: <sip:ClientB@sv71.gmx.com>
   Content-Type: application/sdp
   **Content-Disposition: session;**
   **action=remote-retrieval;**
   **action=redirect-forwards-request**
   Content-Length: 134
   v=0
   o=ClientB 4770 4772 IN IP4 sv71.gmx.com
   s=
   c=IN IP4 27.159.111.76
   t=0 0
   a=sendrecv
   m=audio 8275 RTP/AVP 8
   a=rtpmap:8 PCMU/8000
**Nachricht (13): 200 OK Client A -> Client B**
   SIP/2.0 200 OK
   From: sip:ClientB@gmx.com;tag=0da40dd4-81553525
   To: sip:ClientA@munichnet.com;tag=1c24841
   Call-ID: call-973574144@munichnet.com
   CSeq: 3 INVITE
   Contact: <sip:ClientA@pc43.munichnet.com>
   Content-Type: application/sdp
   **Content-Disposition: session;**
   **action=remote-retrieval-ack;**
   **action=redirect-bearer-connected-indication**
   Content-Length: 172
   v=0
   o=ClientA 2890844526 2890844528 IN IP4 pc43.munichnet.com s=
   c=IN IP4 192.0.2.101
   t=0 0
   a=sendrecv
   m=audio 49172 RTP/AVP 8
   a=rtpmap:8 PCMA/8000
**Nachricht (14): ACK Client B -> Client A**
   ACK sip:ClientA@pc43.munichnet.com SIP/2.0
   From: sip:ClientB@gmx.com;tag=0da40dd4-81553525
   To: sip:ClientA@munichnet.com;tag=1c24841
   Call-ID: call-973574144@munichnet.com
   CSeq: 3 ACK
   Content-Length: 0
**Nachricht (15): Re-INVITE Client B -> Client C**
   INVITE sip:ClientC@nb23.tomnet.de SIP/2.0
   From: sip:ClientB@gmx,com;tag=0da40dd4-81553526
   To: sip:ClientC@tomnet.de
   Call-ID: call-6789@gmx.com
   CSeq: 11 INVITE
   Contact: <sip:ClientB@sv71.gmx.com>
   Content-Type: application/sdp
   **Content-Disposition: session;**
   **action=redirect-forwards-request**
   Content-Length: 120
   v=0
   o=ClientB 5612 5613 IN IP4 sv71.gmx.com
   s=
   c=IN IP4 192.0.2.101
   t=0 0
   m=audio 49172 RTP/AVP 8
   a=rtpmap:8 PCMU/8000
**Nachricht (16): 200 OK Client C -> Client B**
   SIP/2.0 200 OK
   From: sip:ClientB@gmx,com;tag=0da40dd4-81553526
   To: sip:ClientC@tomnet.de;tag=6545b243a
   Call-ID: call-6789@gmx.com
   CSeq: 11 INVITE
   Contact: <sip:ClientC@nb23.tomnet.de>
   Content-Type: application/sdp
   **Content-Disposition: session;**
   **action=redirect-bearer-connected-indication**
   Content-Length: 127
   v=0
   o=ClientC 293845 293846 IN IP4 nb23.tomnet.de
   s=
   c=IN IP4 27.159.111.76
   t=0 0
   m=audio 8275 RTP/AVP 8
   a=rtpmap:8 PCMU/8000
**Nachricht (17): ACK Client B -> Client C**
   ACK sip:ClientC@nb23.tomnet.de SIP/2.0
   From: sip:ClientB@gmx,com;tag=0da40dd4-81553526
   To: sip:ClientC@tomnet.de;tag=6545b243a
   Call-ID: call-6789@gmx.com
   CSeq: 11 ACK
   Content-Length: 0

Dem Fachmann ist klar, dass die Erfindung selbstverständlich nicht nur in den beschriebenen Szenarien, sondern universell in allen Szenarien eingesetzt werden kann, in denen das SIP oder SIP_T Protokoll verwendet wird. Insbesondere ist ein Einsatz in folgenden Szenarien denkbar:
- VoIP Trunking Subscriber <-> VoIP Trunking Subscriber mit dem Protokoll SIP_T zur Signalisierung zwischen Controllern MGC
- SIP Client <-> VoIP Trunking Subscriber
- SIP Client <-> Access Gateway
- SIP Client <-> H.323 Subscriber
- SIP Client <-> VoDSL Subscriber (angeschlossen über ein Integrated Access Device IAD bzw. ein Customer Premises Gateway CPG)
- SIP Client <-> SIP Client

Abschließend sei darauf hingewiesen, dass die Beschreibung der für die Erfindung relevanten Komponenten des Kommunikationsnetzes grundsätzlich nicht einschränkend zu verstehen ist. Für einen einschlägigen Fachmann ist insbesondere offensichtlich, dass Begriffe wie Applikation, Client, Server, Gateway, Controller, etc... funktional und nicht physikalisch zu verstehen sind. Somit können beispielsweise die Endpunkte A, B auch teilweise oder vollständig in Software / Computerprogrammprodukten P und/oder über mehrere physikalische Einrichtungen verteilt realisiert werden.

## Patentansprüche

1. SIP Protokoll,
umfassend zumindest ein Protokollelement zur Anzeige der Ursache(n) einer Bearer Modifikation.

2. SIP Protokoll nach Anspruch 1,
bei dem das Protokollelement in ein Content-Disposition Header Field gemäß dem Standard RFC2183 eingebettet ist.

3. SIP Protokoll nach einem der vorstehenden Ansprüche,
bei dem das Protokollelement in ein SDP Protokoll nach dem Standard RFC2327 eingebettet ist.

4. SIP Protokoll nach einem der vorstehenden Ansprüche,
bei dem das Protokollelement als Parameter (action) ausgebildet ist, der mehrfach vorgesehen sein kann.

5. SIP Protokoll nach dem vorstehenden Anspruch,
bei dem der Wertebereich des Parameters zumindest einen der folgenden Werte aufweist: connect-backward, connect-forward, connect-forward-no-notification, connect-forward-plus-notification, connect-forward-no notification-plus-selected codec, connect forward-plus-notification-plus-selected codec, connected, switched, selected-codec, modify-codec, successful-codec-modification, codec-modification-failure, mid-call-codec-negotiation, modify-to-selected-codec-information, midcall-codec-negotiation-failure, redirect-backwards-request, redirect-forwards-request, redirect-bearer-release-request, redirect-bearer-release-proceed, redirect-bearer-release-complete, redirect-cut-through-request, redirect-bearerconnected-indication, redirect-failure, remote-hold, remote-hold-ack, remote-retrieval, remote-retrieval-ack.

6. SIP Protokoll nach einem der vorstehenden Ansprüche,
bei dem das SIP Protokoll nach einem der Standards RFC2543, RFC3261 oder RFC3372 ausgebildet ist.

7. Verfahren zu Modifikation eines Bearers in einem Kommunikationsnetz, bei dem die Ursache der Bearer Modifikation mit einem Protokoll nach einem der vorstehenden Protokollansprüche signalisiert wird - insbesondere mit Protokollelementen, die im gemäß dem Standard RFC2045 ausgebildeten MIME Message Body von SIP Messages vorgesehen sind.

8. Computerprogrammprodukt (P) - insbesondere SIP Client Software (SC) -, umfassend Softwarecodeabschnitte, mit denen ein Verfahren nach dem vorstehenden Verfahrensanspruch durch zumindest einen Prozessor ausgeführt wird.

9. Vorrichtung - insbesondere Controller (MGC), SIP Telephon oder SIP Proxy (SP) -, umfassend Mittel zur Durchführung eines Verfahrens nach dem vorstehenden Verfahrensanspruch.

10. Anordnung - insbesondere paketorientiertes Netz (IN), integriertes Sprach-Daten-Netz (SDN) oder hybrides Netz (IN, PSTN) -, umfassend Computerprogrammprodukte und/oder Vorrichtungen zur Durchführung eines Verfahrens nach dem vorstehenden Verfahrensanspruch.
